# FASCICULE DE BREVET EUROPEEN

(11) **EP 1 428 590 B1**
(45) Date de publication et mention de la délivrance du brevet: **22.03.2017**
(21) Numéro de dépôt: 03293077.8
(22) Date de dépôt: 09.12.2003
(51) Int. Cl.: B21C 37/15, F16L 39/00, F23J 13/02

(54) **Procédé de fabrication d'un élément de conduit à tuyaux concentriques et élément de conduit à tuyaux concentriques correspondant**
Verfahren zur Herstellung eines Rohrleitungselements mit konzentrischen Rohren und entsprechendes Rohrleitungselement
Method to produce a conduit element with concentric pipes and corresponding conduit element

(30) Priorité: 11.12.2002 FR 0215681
(43) Date de publication de la demande: 16.06.2004
(73) Titulaire: PARTICIPATION GESTION DEVELOPPEMENT INDUSTRIEL - P.G.D.I.-S.A., 35760 Saint-Grégoire (FR)
(72) Inventeur: Joncoux, Jacques Olivier, 35700 Rennes (FR); Renson, François, 35137 Pleumeleuc (FR)
(74) Mandataire: Le Guen-Maillet

(56) Documents cités:
- DE-A- 19 511 021
- FR-A- 2 803 896
- US-A- 2 693 026
- US-A- 4 096 616

## Description

La présente invention concerne de manière générale un procédé de fabrication d'un élément de conduit à tuyaux concentriques, notamment pour appareil de chauffage à combustion, et un élément de conduit à tuyaux concentriques correspondant, conformément au préambule des revendications 1 et 3 (voir, par exemple, DE29 19 615).

Plus précisément, elle concerne un procédé permettant de réaliser un élément de conduit à tuyaux concentriques comprenant un tuyau intérieur et un tuyau extérieur maintenus, tant axialement que radialement, l'un par rapport à l'autre par une entretoise, plusieurs éléments ainsi réalisés pouvant être assemblés bout à bout pour former un conduit à tuyaux concentriques. Elle concerne également un élément de conduit à tuyaux concentriques qui peut être obtenu par un tel procédé.

Un appareil de chauffage à combustion, pour être alimenté en comburant, prélève généralement de l'air dans son environnement direct. Toutefois, il peut être également alimenté en air prélevé à distance de l'endroit où il est installé. Par exemple, il peut être alimenté en air provenant de l'extérieur du local dans lequel il est installé.

Généralement, l'air est prélevé à proximité de l'endroit, par exemple l'extérieur d'un bâtiment, où les fumées produites par la combustion peuvent être évacuées. C'est pourquoi il a été proposé, dans le cas d'appareils de chauffage à circuit de combustion étanche, d'utiliser un conduit à tuyaux concentriques dans lequel un tuyau intérieur véhicule les fumées à évacuer, l'air destiné à alimenter l'appareil de chauffage circulant, lui, dans l'espace restant du tuyau extérieur, autour du tuyau intérieur. Ce type de conduit est décrit, par exemple, dans la demande de brevet français n° 2 803 896.

Ces conduits à tuyaux concentriques sont généralement constitués de plusieurs éléments de conduit destinés à être mis bout à bout, chacun de ces élément étant constitué de deux tuyaux concentriques maintenus l'un par rapport à l'autre au moyen d'une entretoise. Bien entendu, les tubes intérieurs des différents éléments ont tous le même diamètre et les tubes extérieurs des différents éléments ont également tous le même diamètre, supérieur au diamètre des tubes intérieurs. Les éléments de conduit sont pourvus, au niveau des extrémités de leurs tubes intérieurs et extérieurs, de moyens permettant l'accrochage avec d'autres éléments de conduit. Généralement, il s'agit de moyens comme l'évasement d'une extrémité de tuyau permettant l'emboîtement d'un autre tuyau dans ce tuyau. Les éléments de conduit sont alors assemblés par emboîtement, tuyau extérieur dans tuyau extérieur et tuyau intérieur dans tuyau intérieur. Les entretoises permettant de maintenir les tuyaux intérieur et extérieur l'un par rapport à l'autre sont généralement des pattes ménagées sur la périphérie du tuyau intérieur par exemple au moyen d'une bague serrée autour de ce tuyau ou bien maintenue dans une rainure périphérique ménagée sur la surface extérieure du tuyau intérieur, ces pattes faisant saillie radialement et étant adaptées à venir s'encliqueter dans une rainure périphérique ménagée sur la surface intérieure du tuyau extérieur. La demande de brevet français n° 2 803 896 précitée décrit de telles pattes fixées sur une bague. Alternativement, comme c'est le cas dans le dispositif décrit dans le document de brevet européen EP 0 553 936 B1, les entretoises sont des organes de liaison élastiques en forme de fil ou de barre dont des parties viennent se loger dans des évidements ménagés les uns sur la surface intérieure du tuyau extérieur et les autres sur la surface extérieure du tuyau intérieur.

On connaît aussi le document US-A-2,693,026 qui décrit une méthode pour réaliser un assemblage de tubes concentriques séparés par des ailettes qui sont libres et maintenues dans un système de mors jusqu'au moment de l'expansion du tube intérieur.

On connaît aussi le document US-A-4,096,616 qui décrit une méthode de production de tubes concentriques. Cette méthode consiste en une insertion du tube intérieur dans le tube extérieur ainsi que l'insertion d'entretoises, qui sont libres entre les tubes jusqu'au moment de l'expansion du tube intérieur.

Le mode d'installation des entretoises par encliquetage existant dans l'état de la technique présente un certain nombre d'inconvénients, parmi lesquels on peut citer l'opération de montage qui s'avère ne pas être aisée à réaliser. De plus, les solutions existantes présentent un problème de coût, le formage et la mise en place des différents composants des éléments de conduit puis l'assemblage de ces composants demandant un certain nombre d'étapes de fabrication qu'il serait intéressant de diminuer.

La présente invention a notamment pour objet de proposer un procédé simplifié de fabrication d'un élément de conduit à tuyaux concentriques permettant de résoudre ces problèmes.

On connaît également le document DE2919615 qui décrit un élément de conduit à tuyaux concentriques, notamment pour appareil de chauffage à combustion, ledit élément étant du type constitué d'un tuyau intérieur (9) et un tuyau extérieur (1) montés coaxialement et maintenus l'un par rapport à l'autre par des moyens formant entretoise. Le procédé d'assemblage dudit élément comprend :
- une étape de fixation desdits moyens formants entretoises (14) à la périphérie d'une ébauche dudit tuyau intérieur;
- une étape d'installation de ladite ébauche dudit tuyau intérieur sur laquelle sont fixés lesdits moyens formant entretoises dans ledit tuyau extérieur; et
- une étape d'expansion dudit tuyau intérieur consistant en une expansion de ladite ébauche dudit tuyau intérieur au moyen d'un dispositif d'expansion de tube, ladite expansion permettant à chaque extrémité libre des moyens formant entretoise de venir en contact avec sur la paroi intérieure dudit tuyau extérieur assurant ainsi, par la pression des moyens formant entretoise contre la paroi intérieure dudit tuyau extérieure, un bon assemblage des deux tuyaux coaxialement l'un par rapport à l'autre. Il est même envisagé dans ce document la déformation dudit tuyau extérieur sous la pression des entretoises, créant ainsi une dépression augmentant le pouvoir d'assemblage des tuyaux.

Néanmoins, ce procédé présente l'inconvénient que la déformation créée par les entretoises sur la paroi intérieure du tuyau extérieur a lieu pendant l'assemblage des tuyaux et n'est pas, dans ces conditions, toujours facile à maîtriser. Il peut en résulter des assemblages de mauvaises qualités préjudiciables à la longévité du conduit réalisé.

La présente invention est une solution à ce problème et est donc caractérisée en ce que ledit procédé inclut également une étape de formation d'une gorge annulaire sur la paroi intérieure dudit tuyau extérieur (1) en vue de constituer ledit logement (5) dans lequel vient se loger l'extrémité libre desdites entretoises (14) lors de ladite étape d'expansion.

Ainsi, au moment de l'assemblage, les tuyaux étant installés l'un par rapport, l'étape d'expansion du tuyau intérieur a pour effet d'amener les extrémités libres des entretoises à l'intérieur de la gorge, assurant ainsi l'assemblage. Contrairement au procédé qui est décrit dans le document DE2919615, le tuyau extérieur ne se déforme pas pendant le processus d'expansion. Il peut même en résulter un jeu de l'assemblage puisque les entretoises peuvent ne pas être en contact avec le tuyau extérieur. Il en résulte que l'espace annulaire entre les deux tuyaux est calibré de dimensions donnée, ce qui permet, par exemple dans le domaine du chauffage ou de la ventilation, de garantir des débits d'air si l'espace annulaire est vide ou d'assurer une quantité d'isolant si l'espace annulaire est rempli d'isolant.

Les autres caractéristiques avantageuses de l'invention sont exposées dans les revendications dépendantes annexées.

De la sorte, l'installation d'entretoise selon l'invention se fait beaucoup plus simplement et à moindre coût que l'installation d'entretoises par encliquetage connue dans l'état de la technique car la conformation du tube intérieur et la mise en place des entretoises sont réalisées en une étape. L'opération de mise en place des entretoises est également facilitée. En outre, elle permet un maintien de meilleure qualité des tuyaux intérieur et extérieur l'un par rapport à l'autre, dans la mesure où ce maintien est radial (les entretoises se trouvant en butée dans le fond du logement) et axial (les entretoises se trouvant en butée contre chaque flanc dudit logement).

On notera que grâce au procédé proposé, une étape de fabrication peut être supprimée, l'expansion de l'ébauche tubulaire du tuyau intérieur et l'assemblage des tuyaux intérieur et extérieur se faisant en une seule et même étape.

Ainsi, selon un autre aspect de la présente invention, ladite ébauche dudit tuyau intérieur peut être une ébauche tubulaire simple et ladite étape d'expansion dudit tuyau intérieur forme l'étape de fabrication de ce tuyau intérieur.

Par le terme ébauche tubulaire simple, on entend une ébauche tubulaire de section constante, par opposition à un tuyau comprenant des éléments entraînant une modification de section comme des évasements, des rétreints, des logements, des ergots et autres. Une telle ébauche tubulaire simple peut être par exemple fabriquée au moyen d'une tôle roulée puis soudée de manière à former un tube cylindrique.

Selon un autre aspect de la présente invention, ladite étape de fabrication dudit tuyau extérieur est réalisée par expansion d'une ébauche tubulaire simple au moyen dudit dispositif d'expansion de tube.

De la sorte, un procédé simple de fabrication d'un élément de conduit à tuyaux concentriques peut être le suivant. D'abord, le dispositif d'expansion du tube est introduit dans une première ébauche tubulaire et ce dispositif est activé afin de former le tuyau extérieur. Le dispositif d'expansion de tube est ensuite remis en position de repos et on installe à l'intérieur du tuyau extérieur qui vient d'être fabriqué une seconde ébauche tubulaire sur laquelle les entretoises, par exemple formées de broches, ont été fixées, cette ébauche tubulaire étant traversée par le dispositif d'expansion de tube. Le dispositif d'expansion de tube est ensuite activé pour former le tuyau intérieur tout en encastrant les entretoises dans le logement ménagé sur la paroi intérieure du tuyau extérieur.

Conformément à l'invention, ladite partie inférieure dudit tuyau extérieur d'un élément de conduit supérieur comprend un moyen en saillie adapté à venir porter contre une extrémité supérieure dudit embout femelle dudit tuyau extérieur.

Avantageusement, ledit embout femelle du tuyau extérieur comprend une gorge adaptée à recevoir un joint à lèvre et des bossages répartis en périphérie de la partie inférieure d'un tuyau extérieur d'un élément de conduit supérieur.

La présente invention concerne également un élément de conduit tel que défini dans la revendicaiton 3.

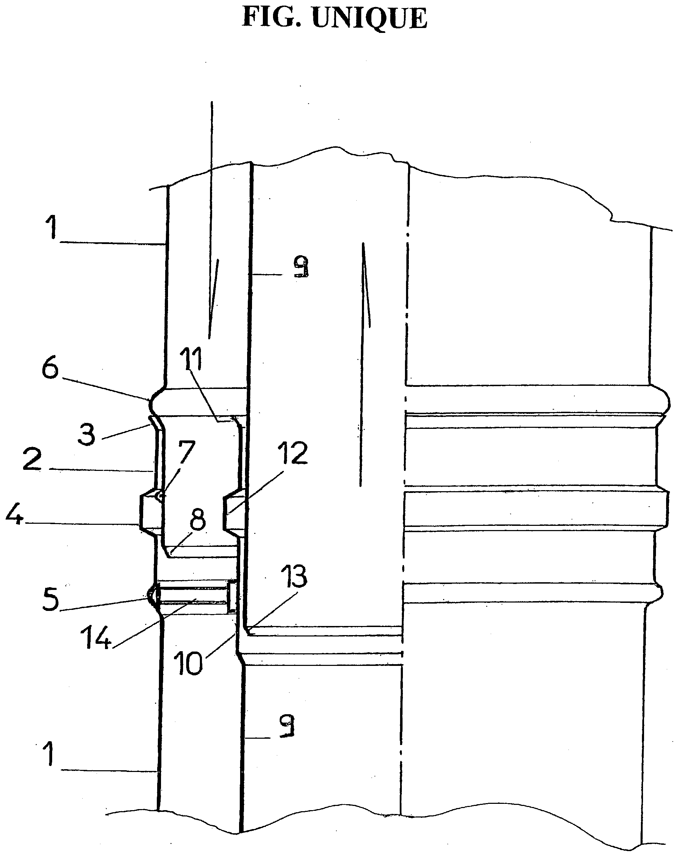

L'invention, ses caractéristiques et ses avantages, ressortiront mieux de la description détaillée qui suit d'un exemple de réalisation d'un procédé de fabrication d'un élément de conduit à tuyaux concentriques selon l'invention, en référence à la figure annexée, où la Fig. unique est une vue schématique en élévation de côté avec une partie en coupe axiale d'un élément de conduit à tuyaux concentriques selon l'invention.

Dans l'exemple de réalisation représenté à la Fig. unique, la présente invention s'applique à la fabrication d'un conduit à tuyaux concentriques pour appareil de chauffage à circuit de combustion étanche. Un tel conduit comprend un tuyau intérieur véhiculant les fumées à évacuer, l'air destiné à alimenter l'appareil de chauffage circulant, lui, dans l'espace restant du tuyau extérieur, autour du tuyau intérieur. Un tel conduit est constitué de plusieurs éléments de conduit (coudes, tés, éléments droits, etc.) destinés à être emboîtés entre eux.

En référence à la Fig. unique, un élément de conduit comprend globalement un tuyau extérieur 1 et un tuyau intérieur 9 maintenus l'un par rapport à l'autre par un ensemble d'entretoises 14, des moyens d'assemblage par emboîtement étant ménagés au niveau des extrémités de ces tubes intérieur et extérieur.

Le tuyau extérieur 1 est de forme générale cylindrique circulaire. De même, le tuyau intérieur 9 est de forme générale cylindrique circulaire, de diamètre moins important que le tuyau extérieur 1 et de longueur sensiblement plus importante. Lorsque le tuyau intérieur 9 se trouve dans le tuyau extérieur 1, leurs extrémités supérieures se trouvent à la même hauteur et, par conséquent, le tuyau intérieur 9 dépasse au-dessous du tuyau extérieur 1 de sorte qu'il est plus facile d'emboîter deux éléments entre eux.

Les tuyaux 1 et 9 comprennent chacun une partie supérieure de plus grand diamètre ou expansion, respectivement 2 et 10, formant embout femelle adapté à recevoir la partie inférieure d'un tuyau, respectivement extérieur et intérieur, d'un élément de conduit supérieur emboîté sur l'élément de conduit considéré.

Dans l'exemple de réalisation représenté, les entretoises 14 sont constituées de broches par exemple au nombre d'au moins deux, par exemple trois, réparties à la périphérie du tube intérieur 9 de manière à s'étendre radialement et ainsi s'interposer entre la paroi intérieure du tuyau extérieur 1 et la paroi extérieure du tuyau intérieur 9. Ainsi, les tuyaux 1 et 9 sont maintenus l'un par rapport à l'autre, tant axialement que radialement comme on le verra par la suite, de sorte qu'ils s'étendent de manière coaxiale en formant entre eux un espace annulaire pour le passage des gaz comburants. Les broches 14 sont fixées, par exemple par soudage ou tout autre moyen assurant une fonction de fixation, chacune par une extrémité sur la paroi extérieure du tuyau intérieur de manière à s'étendre radialement vers l'extérieur. Elles sont réparties régulièrement sur la périphérie de ce tuyau intérieur dans un plan perpendiculaire à l'axe du tuyau situé au niveau d'une partie inférieure d'un embout femelle 10 de ce tuyau intérieur qui sera décrit plus loin. Les broches 14 sont de même longueur, de sorte que les extrémités libres de ces broches se trouvent sur un même cercle. Ainsi qu'on le verra par la suite, ces extrémités libres des broches 14 sont encastrées dans un logement 5 du tuyau extérieur, de sorte que non seulement ces broches assurent une fonction de blocage des tuyaux l'un par rapport à l'autre dans un plan horizontal mais également dans un plan vertical, c'est-à-dire qu'elles empêchent la translation axiale du tuyau intérieur par rapport au tuyau extérieur et un mouvement radial de l'un vers l'autre. Autrement dit, elles assurent une jonction mécanique permanente entre le tuyau extérieur et le tuyau intérieur.

On va décrire maintenant un procédé de fabrication d'un élément de conduit à tuyaux concentriques selon la présente invention. Deux ébauches tubulaires sont d'abord préparées, l'une destinée à former le tuyau intérieur et l'autre destinée à former le tuyau extérieur de l'élément de conduit considéré. Sur l'ébauche qui est destinée à former le tuyau intérieur, à proximité de l'extrémité destinée à devenir l'extrémité supérieure, sont fixées, par exemple par soudage, les broches 14. Un dispositif d'expansion de tube est alors introduit dans l'ébauche tubulaire destinée à former le tuyau extérieur et la fabrication du tuyau extérieur 1 est réalisée par expansion de cette ébauche tubulaire. On notera que cette formation du tuyau extérieur pourrait être réalisée tout autrement. Le tuyau extérieur 1 fabriqué, le dispositif d'expansion de tube est remis dans sa position de repos et l'autre ébauche tubulaire 9, sur laquelle les broches d'entretoise 14 ont été soudées, est introduite dans le tuyau extérieur 1, le dispositif d'expansion de tube étant entré dans cette ébauche 9 suivant son axe à hauteur des entretoises 14. Le dispositif d'expansion de tube est ensuite activé pour former le tuyau intérieur 9 et, en même temps, amener les extrémités des broches 14 dans un logement 5 du tube extérieur 1.

Deux cas sont à considérer : le premier où le logement 5 est en fait constitué par une gorge périphérique 5 réalisée au cours de l'étape de fabrication du tuyau extérieur, c'est-à-dire préalablement à l'étape d'expansion du tuyau intérieur et le second où ce logement 5 est formé par les entretoises 14 elles-mêmes au cours de l'expansion du tuyau intérieur 9. Dans le premier cas, l'expansion du tuyau intérieur 9 permet d'amener les têtes des broches 14 à s'encastrer dans cette gorge 5. Dans le second cas, l'expansion du tuyau intérieur amène les têtes des broches 14 à s'encastrer directement dans la paroi du tuyau extérieur qui vient alors se déformer. Après expansion, le tube extérieur ne comporte pas de gorge 5 mais autant de bossages 5 qu'il y a de broches 14.

La longueur des broches 14 est choisie de manière à ce que, lorsqu'elles sont fixées sur la périphérie de l'ébauche tubulaire destinée à servir de base à la fabrication du tuyau intérieur 9, les extrémités libres des broches 14 se trouvent sur un cercle de diamètre inférieur au plus petit diamètre intérieur du tuyau extérieur 1. Ainsi, l'ébauche tubulaire peut être introduite dans le tuyau extérieur 1.

Dans l'exemple de réalisation représenté à la Fig. unique, la gorge formant logement 5 a un profil demi-circulaire.

Dans l'exemple représenté, est ménagée sur l'embout femelle 10 du tuyau intérieur 9 une section de plus grand diamètre 12 formant, à l'intérieur du tuyau, une gorge trapézoïdale. De même, sur l'embout femelle 2 du tuyau intérieur 1 est ménagée une section de plus grand diamètre 4 formant, à l'intérieur du tuyau, une gorge trapézoïdale. Ces gorges trapézoïdales 4 et 12 sont adaptées à recevoir chacune un joint de manière à assurer l'étanchéité du conduit.

On notera que pour pouvoir assurer une mise en place de ces joints après le processus d'expansion, il est avantageux que la gorge trapézoïdale 4 soit placée entre l'extrémité libre de l'embout 2 et la gorge ou les logements 5. De même, la gorge trapézoïdale 12 se trouve entre l'extrémité libre de l'embout 11 et les broches 14.

On va maintenant décrire plus précisément la structure d'un élément de conduit selon la présente invention.

La partie inférieure de chacun des tuyaux extérieur et intérieur comprend au niveau de son extrémité inférieure un rétreint, respectivement 8 et 13, adapté à faciliter son insertion dans l'embout femelle du tuyau, respectivement extérieur 1 et intérieur 9, d'un élément de conduit inférieur. De même, l'embout femelle de chacun des tuyaux extérieur et intérieur comprend au niveau de son extrémité supérieure un bord évasé vers l'extérieur, respectivement 3 et 11, adapté à faciliter l'insertion de la partie inférieure du tuyau, respectivement extérieur 1 et intérieur 9, d'un élément de conduit supérieur.

Afin d'assurer la fixation des éléments de conduit les uns par rapport aux autres, on a prévu des bossages 7 répartis en périphérie de la partie inférieure du tuyau extérieur 1 d'un élément de conduit supérieur et destinés à venir en butée contre le flanc de la gorge trapézoïdale 4 de la partie supérieure 2 d'un tuyau extérieur 1 d'un élément de conduit inférieur. Ces deux éléments assurent la fixation d'un élément de conduit inférieur à un élément de conduit supérieur lors de la formation de l'ensemble du conduit, laquelle est généralement faite du haut vers le bas.

Conformément à l'invention, la partie inférieure d'un tuyau extérieur 1 comprend, au niveau de l'extrémité supérieure de l'embout femelle 2 du tuyau extérieur 1 d'un élément de conduit inférieur, une section de plus grand diamètre 6, formant saillie, par exemple de profil demi-circulaire, adaptée à venir porter contre le bord évasé 3 de l'embout femelle 2. L'ensemble constitué par les bossages 7 pénétrant dans la gorge 4 et la saillie 6 venant porter contre le bord 3 assure le maintien l'un par rapport à l'autre de deux éléments emboîtés.

Les ébauches tubulaires permettant d'obtenir les tuyaux intérieur 9 et extérieur 1 sont par exemple constituées chacune par une tôle roulée puis soudée de manière à former un tube cylindrique.

L'étanchéité du conduit est assurée par les joints insérés dans les gorges trapézoïdales 4 et 12 des tuyaux extérieur et intérieur.

## Revendications

1. Procédé de fabrication d'un élément de conduit à tuyaux concentriques, notamment pour appareil de chauffage à combustion, ledit élément étant du type constitué d'un tuyau intérieur (9) et d'un tuyau extérieur (1) montés coaxialement et maintenus l'un par rapport à l'autre par des moyens formant entretoise (14) constitués d'un ensemble de broches, ledit procédé comprenant:
une étape de fixation par soudage desdits moyens formants entretoises (14) à la périphérie d'une ébauche dudit tuyau intérieur;
une étape d'installation de ladite ébauche dudit tuyau intérieur sur laquelle sont fixés lesdits moyens formant entretoises dans ledit tuyau extérieur; et
une étape d'expansion dudit tuyau intérieur consistant en une expansion de ladite ébauche dudit tuyau intérieur au moyen d'un dispositif d'expansion de tube, ladite expansion amenant chaque extrémité libre des moyens formant entretoise dans un logement (5) sur la paroi intérieure dudit tuyau extérieur,
**caractérisé en ce qu'**il inclut également, préalablement à l'étape d'installation, une étape de formation d'une gorge annulaire sur la paroi intérieure dudit tuyau extérieur (1) en vue de constituer ledit logement (5) dans lequel vient se loger l'extrémité libre desdites entretoises (14) lors de ladite étape d'expansion, lesdites broches constituant lesdits moyens formant entretoise (14) étant de longueur telle que, une fois lesdites broches soudées à la périphérie du tuyau intérieur, leurs extrémités libres se trouvent avant ladite étape expansion, sur un cercle de diamètre inférieur au diamètre intérieur dudit tuyau extérieur (1) et **en ce qu'**il inclut encore :
une étape de formation d'un moyen en saillie (6) dans la partie inférieure dudit tuyau extérieur et une étape de formation d'un bord évasé (3) à l'extrémité supérieure dudit tuyau extérieur (1), ledit moyen de saillie (6) et ledit bord évasé (3) étant tels que ledit moyen en saillie (6) d'un élément de conduit soit adapté à venir porter contre ledit bord évasé (3) dudit tuyau extérieur (1) d'un élément de conduit sous-jacent.

2. Procédé selon la revendication 1, **caractérisé en ce qu'**il inclut encore une étape de formation de bossages (7) répartis en périphérie dans la partie inférieure du tube extérieur (1) et de moyens (4) dans la partie supérieure du tube extérieur, lesdits bossages (7) d'un élément de conduit étant adaptés à venir se loger dans lesdits moyens (4) d'un élément de conduit sous-jacent.

3. Elément de conduit à tuyaux concentriques, notamment pour appareil de chauffage à combustion, ledit élément comprenant un tuyau intérieur (9) expansé et un tuyau extérieur (1) maintenu l'un par rapport à l'autre par des moyens formant entretoise (14) fixés par soudage à la périphérie dudit tuyau intérieur (9), **caractérisé en ce que** les extrémités desdits moyens formant entretoise sont encastrées dans des logements que comportent ledit tuyau extérieur (1), **en ce que** lesdits moyens formant entretoise (14) sont constitués d'un ensemble de broches, **en ce que** le logement est une gorge annulaire, **en ce que** le tuyau extérieur comprend dans une partie inférieure un moyen en saillie (6) et à une extrémité un bord évasé (3), de manière à ce que le moyen en saillie (6) d'un élément de conduite soit adapté à venir porter contre le bord évasé (3) d'un élément de conduite sous-jacent, cet élément de conduite étant fabriqué selon un procédé selon l'une des revendications précédentes 1 à 2.

## Patentansprüche

1. Verfahren zum Herstellen eines Leitungselements mit konzentrischen Röhren, insbesondere für eine Verbrennungsheizvorrichtung, wobei das Element von einem Typ ist, der aus einer inneren Röhre (9) und einer äußeren Röhre (1) gebildet ist, die koaxial montiert sind und relativ zueinander durch Mittel gehalten werden, die einen Abstandshalter (14) bilden und aus einer Anordnung von Stiften gebildet sind, wobei das Verfahren Folgendes umfasst:
einen Schritt des Befestigens durch Verschweißen der Abstandshalter (14) bildenden Mittel mit dem Umfang eines Rohlings der inneren Röhre;
einen Schritt des Installierens des Rohlings der inneren Röhre, an dem die Abstandshalter bildenden Mittel befestigt sind, in der äußeren Röhre; und
einen Schritt des Ausdehnens der inneren Röhre, der aus einem Ausdehnen des Rohlings der inneren Röhre mittels einer Rohrausdehnungsvorrichtung besteht, wobei das Ausdehnen jedes freie Ende der einen Abstandshalter bildenden Mittel in einen Aufnahmeraum (5) in der Innenwand der äußeren Röhre bringt,
**dadurch gekennzeichnet, dass** es außerdem vor dem Installationsschritt einen Schritt des Bildens einer ringförmigen Kehle in der Innenwand der äußeren Röhre (1) umfasst, um den Aufnahmeraum (5) zu bilden, in dem das freie Ende der Abstandshalter (14) in dem Ausdehnungsschritt aufgenommen wird, wobei die Stifte, die die einen Abstandshalter (14) bildenden Mittel bilden, eine Länge besitzen, derart, dass dann, wenn die Stifte mit dem Umfang der inneren Röhre verschweißt sind, ihre freien Enden sich vor dem Ausdehnungsschritt auf einem Kreis mit einem Durchmesser, der kleiner als der Innendurchmesser der äußeren Röhre (1) ist, befinden, und dass es außerdem Folgendes umfasst:
einen Schritt des Bildens eines Vorsprungsmittels (6) in dem unteren Teil der äußeren Röhre und einen Schritt des Bildens eines erweiterten Randes (3) am oberen Ende der äußeren Röhre (1), wobei das Vorspannungsmittel (6) und der erweiterte Rand (3) derart sind, dass das Vorspannungsmittel (6) eines Leitungselements dafür ausgelegt ist, an dem erweiterten Rand (3) der äußeren Röhre (1) eines angrenzenden Leitungselements in Anschlag zu gelangen.

2. Verfahren nach Anspruch 1, **dadurch gekennzeichnet, dass** es außerdem einen Schritt des Bildens von Höckern (7), die in Umfangsrichtung im unteren Teil der äußeren Röhre (1) verteilt sind, und von Mitteln (4) im oberen Teil der äußeren Röhre umfasst, wobei die Höcker (7) eines Leitungselements dafür ausgelegt sind, in den Mitteln (4) eines angrenzenden Leitungselements aufgenommen zu werden.

3. Leitungselement mit konzentrischen Röhren, insbesondere für eine Verbrennungsheizvorrichtung, wobei das Element eine ausgedehnte innere Röhre (9) und eine äußere Röhre (1), die relativ zueinander durch einen Abstandshalter (14) bildende Mittel, die durch Verschweißen mit dem Umfang der inneren Röhre (9) befestigt sind, gehalten werden, umfasst, **dadurch gekennzeichnet, dass** die Enden der einen Abstandshalter bildenden Mittel in Aufnahmeräume eingesetzt sind, die die äußere Röhre (1) aufweist, dass die einen Abstandshalter (14) bildenden Mittel durch eine Anordnung von Stiften gebildet sind, dass der Aufnahmeraum eine ringförmige Kehle ist und dass die äußere Röhre in einem unteren Teil ein Vorsprungsmittel (6) und an einem Ende einen erweiterten Rand (3) umfasst, derart, dass das Vorsprungsmittel (6) eines Leitungselements dafür ausgelegt ist, an dem erweiterten Rand (3) eines angrenzenden Leitungselements in Anschlag zu gelangen, wobei dieses Leitungselement gemäß einem Verfahren nach einem der Ansprüche 1 bis 2 hergestellt ist.

## Claims

1. Method for manufacturing a conduit element with concentric pipes, in particular for a combustion heating apparatus, the said element being of the type constituted by an inner pipe (9) and by an outer pipe (1) which are mounted coaxially and held with respect to one another by spacer-forming means (14) constituted by a set of pins, the said method comprising:
a step of fixing the said spacer-forming means (14) by welding to the periphery of a blank of the said inner pipe;
a step of installing the said blank of the said inner pipe on which the said spacer-forming means are fixed into the said outer pipe; and
a step of expanding the said inner pipe that consists in an expansion of the said blank of the said inner pipe by means of a tube expansion device, the said expansion bringing each free end of the spacer-forming means into a housing (5) on the inner wall of the said outer pipe,
**characterized in that** it also includes, prior to the installation step, a step of forming an annular groove on the inner wall of the said outer pipe (1) with the aim of creating the said housing (5) in which the free end of the said spacers (14) will be housed during the said expansion step, the said pins constituting the said spacer-forming means (14) being of a length such that, once the said pins have been welded to the periphery of the inner pipe, their free ends are located, before the said expansion step, on a circle with a smaller diameter than the inside diameter of the said outer pipe (1), and **in that** it further includes:
a step of forming a projecting means (6) in the lower part of the said outer pipe and a step of forming a flared edge (3) at the upper end of the said outer pipe (1), the said projecting means (6) and the said flared edge (3) being such that the said projecting means (6) of one conduit element is adapted to bear against the said flared edge (3) of the said outer pipe (1) of an underlying conduit element.

2. Method according to Claim 1, **characterized in that** it further includes a step of forming bosses (7) distributed peripherally in the lower part of the outer tube (1) and means (4) in the upper part of the outer tube, the said bosses (7) of one conduit element being adapted to be housed in the said means (4) of an underlying conduit element.

3. Conduit element with concentric pipes, in particular for a combustion heating apparatus, the said element comprising an expanded inner pipe (9) and an outer pipe (1) held with respect to one another by spacer-forming means (14) fixed to the periphery of the said inner pipe (9) by welding, **characterized in that** the ends of the said spacer-forming means are embedded in housings belonging to the said outer pipe (1), **in that** the said spacer-forming means (14) are constituted by a set of pins, **in that** the housing is an annular groove, **in that** the outer pipe comprises a projecting means (6) in a lower part and a flared edge (3) at one end such that the projecting means (6) of one conduit element is adapted to bear against the flared edge (3) of an underlying conduit element, this conduit element being manufactured by a method according to one of the preceding Claims 1 and 2.
